# EUROPEAN PATENT APPLICATION

(11) **EP 2 674 472 A1**
(43) Date of publication of application: **18.12.2013**
(21) Application number: 12006009.0
(22) Date of filing: 22.08.2012
(51) Int. Cl.: C10L 10/06, C10B 53/07

(54) **The method for conducting of a pyrolysis process of waste plastics and/or rubber and/or organic wastes and the use of a chemical modifier in the method**

(30) Priority: 12.06.2012 PL 39949912
(71) Applicant: DAGAS Sp. z o.o., 05-660 Warka (PL)
(72) Inventor: Majcher, Marek, 05-660 Warka (PL); Przybylski, Wlodzimierz, 05-660 Warka (PL)
(74) Representative: Gizinska-Schohe, Malgorzata

(57) **Abstract**

The object of the invention is a continuous process of pyrolysis of plastic waste and/or rubber waste and/or organic waste, comprising subjecting these components to a thermal decomposition in the pyrolytic reactor without any access to air, at a temperature of 200 to 850°C, under atmospheric pressure or elevated pressure or reduced pressure, characterized in that, into the pyrolytic reactor chamber, a composition of chemical modifier is dosed, which comprises 10 to 30% by weight of water, 20 to 80% by weight of at least one aliphatic alcohol, 5 to 15% by weight of carbamide or its derivatives of R₁R₂N(CO)NR₃R₄ type, wherein R₁, R₂, R₃, R₄ are the same or different and constitute C₁-C₆ alkyl groups, and 5 to 15% by weight of monoacetylferrocene, wherein this composition, prior to dispensing into the reactor, is additionally diluted with water, so that after dilution, it contains from about 5% by weight of composition and 95% by weight of water to 15% by weight of composition, and 85% of water.

## Description

The object of the invention is the method of conducting a pyrolysis process of plastic waste, in particular polyolefinic, and/or rubber waste, particularly tires, and/or organic waste, such as biomass or municipal waste. The solution is also related to the use of a chemical modifier in the pyrolysis process. The developed solution relates to the field of plastics and other organic waste recycling carried out in a way which is minimally imposing on the environment, being particularly an alternative to waste incineration.

In the era of increasing industrialization, the elimination, from our environment, of industrial waste and municipal waste, which contain undegradable plastics and rubber waste, especially such as all kinds of packaging, construction waste, car tires, scrap vehicles fraction containing polymer plastics, etc, still continues to be an incompletely solved problem.

Thermal decomposition of plastics, rubber or organic substances may be carried out by pyrolysis, gasification, hydrocracking, and incineration, which is the least favorable for the environment.

The pyrolysis process is a long-known method of thermal degradation (destructive distillation) of polymeric substances. Pyrolysis can be a low-temperature process (200 - 450°C) or a high temperature process (550 - 850°C). Through heat treatment of the feed in the pyrolytic reactor, pyrolytic gas (dry gas), fuel fractions, oil fractions, and mazout are obtained. In the process, metal products (after processing e.g. of tires) and other solid products, such as carbon black and graphite, are obtained.

A major problem in the pyrolysis processes is their limited ability to be carried out continuously. It is primarily due to the need to eliminate the deposited quick coke in the installation (carbon black deposition), which must be periodically removed. Elimination of the quick coke deposition is provided by specific modifications to the construction of the reactor or implementation of different methods of intensive mixing of raw materials subjected to pyrolysis so that it was not followed by local overheating and quick coke release.

Patent PL194973B1 presents an installation to carry out the pyrolysis under atmospheric conditions or under elevated pressure or reduced pressure, which uses a tubular heating element, at the inlet of the heating pipe and in the interior thereof being located a burner. The heating pipe needs to have a specific ratio between its diameter and length. Thus, no deposition of quick coke on the heating elements was observed, but it was located together with other post-pyrolytic waste at the bottom of the reactor after completion of the pyrolysis process. The authors indicate at the same time that, in the event of coking of the heating pipe, it can easily be replaced, which means that the presented construction of the reactor has not always assured the elimination of the quick coke deposition. A disadvantage of this process can also be an uneven heating of the heating pipe and, consequently, the need to use a number of heating tubes with several burners. The described process is not continuous and is not a zero emission process.

Methods for disposing of quick coke from the pyrolytic environment by means of appropriate catalysts are also known.

In the description of the international patent application WO2008126042A1, a process of pyrolysis of rubber waste, such as car tires in the presence of cracking catalysts, e.g. catalysts based on zeolites, is described. However, the process is carried out with the access of air, and carbon black is intentionally afterburned, in the process, to the carbon dioxide, which is optionally recovered from the exhaust gases through the processes of chemical adsorption and extraction. The presented method leads to a complete disposal of the carbon black from the depolymerized material.

Many other methods of conducting the pyrolysis of plastics and rubber waste, with various types of catalysts, are also known. Examples of catalyst compositions are presented e.g. in the descriptions of the following applications: WO2007038903A1, RU2272826A1 or CN1786116A1. The said catalysts have different functions - they reduce the temperature of the process, increase the efficiency of fuel fractions, accelerate the pyrolysis process or initiate it after bringing the pyrolytic mixture to a suitable temperature.

There is still a need to improve pyrolysis processes and to select catalysts or modifiers of the above mentioned processes in order to eliminate the residual quick coke on the elements of installation and the risk of the installation destruction, which makes it impossible to conduct the process continuously.

The object of the invention is a continuous process of pyrolysis of plastic waste and/or rubber waste and/or organic waste, comprising subjecting these components to a thermal decomposition in the pyrolytic reactor without any access to air, at a temperature of 200 to 850°C, under atmospheric pressure or elevated pressure or reduced pressure, characterized in that, into the pyrolytic reactor chamber, a composition of chemical modifier is dosed, which comprises 10 to 30% by weight of water, 20 to 80% by weight of at least one aliphatic alcohol, 5 to 15% by weight of carbamide or its derivatives of R₁R₂N(CO)NR₃R₄ type, wherein R₁, R₂, R₃, R₄ are the same or different and constitute C₁-C₆ alkyl groups, and 5 to 15% by weight of monoacetylferrocene, wherein this composition, prior to dispensing into the reactor, is additionally diluted with water, so that after dilution, it contains from about 5% by weight of composition and 95% by weight of water to 15% by weight of composition, and 85% of water.

The composition, before dilution, contains 10 to 30% by weight of water, 20 to 40% by weight of isopropanol, 20 to 40% by weight of n-butanol, 5 to 15% by weight of carbamide and 5 to 15% by weight of monoacetylferrocene, more preferably contains 15 to 25% by weight of water, 25 to 35% by weight of isopropanol, 25 to 35% by weight of n-butanol, 8 to 12% by weight of carbamide, and 8 to 12% by weight of monoacetylferrocene, preferably the modifier composition contains 20% by weight of water, 30% by weight of isopropanol, 30% by weight of n-butanol, 10% by weight of carbamide and 10% by weight of monoacetylferrocene.

In the method, 50 to 500 ml of the diluted modifier composition is dosed into the pyrolytic reactor per 1 ton of plastic waste and/or rubber waste and/or organic waste.

Preferably, 50 to 150 ml of the diluted modifier composition is dosed per 1 ton of plastic waste, especially polyolefinic, or 300 to 500 ml of the diluted composition per 1 ton of rubber waste.

The method is carried out in a zero emission installation, devoid of direct outlet of gases generated in the process into the atmosphere.

The method is carried out in an airtight installation, under reduced pressure conditions, preferably under a pressure of 0.2 to 0.8 atm.

The object of the invention is also the use of a composition comprising 10 to 30% by weight of water, 20 to 80% by weight of at least one aliphatic alcohol, 5 to 15% by weight of carbamide or its derivatives of R₁R₂N(CO)NR₃R₄ type, wherein R₁, R₂, R₃, R₄ are the same or different and constitute C₁-C₆ alkyl groups, and 5 to 15% by weight of monoacetylferrocene, to conduct the continuous pyrolysis of plastic waste and/or rubber waste and/or organic waste in the pyrolytic reactor without any access to air, at a temperature of 300 to 850°C, at atmospheric pressure or elevated pressure or reduced pressure, wherein the composition is diluted with water so that the diluted solution contains 5 to 15% by weight of the original composition.

By the use of the above mentioned modifier in the conducted pyrolysis process, the amount of carbon black generated in the process is globally reduced, and the deposition of quick coke on the elements of the pyrolytic reactor is reduced.

In the method according to the invention, a specific chemical additive was used, which eliminates the deposition of quick coke on the elements of the reactor, especially in the section where the heat is supplied. However, carbon black is still a product formed in the process. Modifier addition does not result in quick coke afterburning, but facilitates its discharge from the reactor. Carbon black deposits are not formed on the walls of the reactor in a chaotic way, which is difficult to predict, but the quick coke is collected freely (without adhesion) in the lower part of the reactor, which facilitates its discharge from the reactor.

The composition of the chemical modifier used in the method according to the invention was described in patent PL209480B1, where it was used under oxygen conditions in power boilers in combustion processes of solid, liquid and gas fuels. The use of modifier assured "afterburning" of residual impurities in the boiler so that the resulting fuel gases had e.g. a lower content of CO. Impurities containing carbon black were afterburned, with free access of air, to CO₂. At the same time, additional energy gain from fuel combustion was achieved (complete combustion, afterburning of ashes).

The prior art does not disclose any information on the use, in the pyrolysis processes, of the modifier compositions of this type based on ferrocene cyclopentadienyl complexes.

Disclosed in PL209480B1, the use of a modifier under conditions of combustion, which was intensively supplied with air, gave no knowledge about pyrolysis processes which take place under different conditions - without acces of oxygen, under different pressure conditions and at different temperatures.

The use of the above mentioned modifier in the fuel combustion processes, as described in the patent PL209480B1, indicated that in the case of pyrolysis using the same modifier, it may be adversely affected by excessive "afterburning" of fuel fractions produced in the pyrolysis.

Therefore, information from the PL209480B 1 description did not provide any knowledge on the suitability of the modifier in the process of pyrolysis.

Now, it has been unexpectedly found that in the pyrolysis process, the modifier has a positive effect - it acts selectively on the quick coke deposition processes, without any negative effects on the depolymerization processes occurring during pyrolysis (efficiency of the obtained fractions in not reduced). The modifier composition used acts as a catalyst affecting selectively the transformations of the forming quick coke (carbon deposits). It was also noted that the use of the above mentioned chemical modifier favors the formation of dry gas (mainly consisting of methane and ethane), in particular methane. In the pyrolysis process without the use of the modifier, 12 to 18% by weight of the dry gases is obtained, and with the use of the modifier according to the invention, higher efficiencies may be obtained, in special conditions up to 70% by weight of the dry gases.

In the method according to the invention, in addition to the above mentioned modifier, other known catalysts can be used. Highly silicic additives, aluminosilicates (SiO₂ + Al₂O₃), catalysts based on zeolite, kaolin, oxides of rare earth metals, etc. are known as examples of catalysts used in the processes of pyrolysis. In the method according to the invention, an additional rutile - titanium catalyst (30% titanium/70% rutile) was used. Catalysts of this type are primarily or only aimed at reducing the temperature of the pyrolysis process; therefore they can used in combination with the modifier composition based on ferrocene cyclopentadienyl complex, which in turn affects the chemical transformations that occur during the pyrolysis.

The main component of the modifier used in the method according to the invention is a complex which is a carrier of iron - monoacetylferrocene, or cyclopenta - 1,3 diene; 1 - (1-cyclopenta - 2,4 - dienylideno) ethanolate of iron 2+ cation. The presence of hydroxyl groups in the reaction medium is of decisive importance for the occuring transformations. The modifier also contains a carbamide or its derivatives such as alkylurea of R₁R₂N(CO)NR₃R₄ type, wherein R₁, R₂, R₃, R₄ are the same or different and constitute C₁-C₆ alkyl groups, e.g. methylene or ethylene groups.

The aliphatic alcohols used in the modifier may have linear or branched chains. Pyrolysis modifier should contain at least one alcohol (OH groups carrier). Preferably, the alcohol is selected from the C₂ - C₁₁ group of alcohols, more preferably C₃ - C₈, especially C₃-C₆. Ethanol, propanol, isopropanol, n-butanol, pentanol, heptanol and octanol are the examples of used alcohols. Through the selection of alcohol, the proportion of hydroxyl groups relative to the number of carbon atoms in the chain changes, and thereby the proportion of hydroxyl groups relative to the weight of the other components of the modifier changes. Preferred results are obtained in particular with the alcohols having intermediate chain lengths, such as isopropanol and n-butanol. Therefore, preferably, the mixture of these two alcohols is used in the modifier. However, the modifier may comprise only one alcohol from the said group or a mixture of three or four alcohols.

The modifier composition may also contain additives which do not affect its properties, e.g. colorants which allow to distinguish between different modifier compositions.

In the method according to the invention, especially polyolefin plastics, e.g. those based on polyethylene and polypropylene, but also other polymers based on heavier monomers (homopolymers and copolymers of PP, PS, and its copolymers, PVC, PA, and others) can be subjected to pyrolytic decomposition. Rubber or caoutchouc waste, which can be subjected to the process according to the invention is especially constituted by car tires.

Organic substances that can be subjected to pyrolysis are mainly constituted by biomass, that is, e.g. plant agricultural waste, wood, etc., or organic municipal waste varied in its composition. The method according to the invention may also be used in waste forming mixtures of the above mentioned substances.

The amount of modifier in the method according to the invention depends on the processed raw material. The heavier organic fractions are comprised in a given raw material, the more modifier is used per ton of raw material. For PE and PE, the smallest amount of modifier is used, and for waste such as tires - the largest amount.

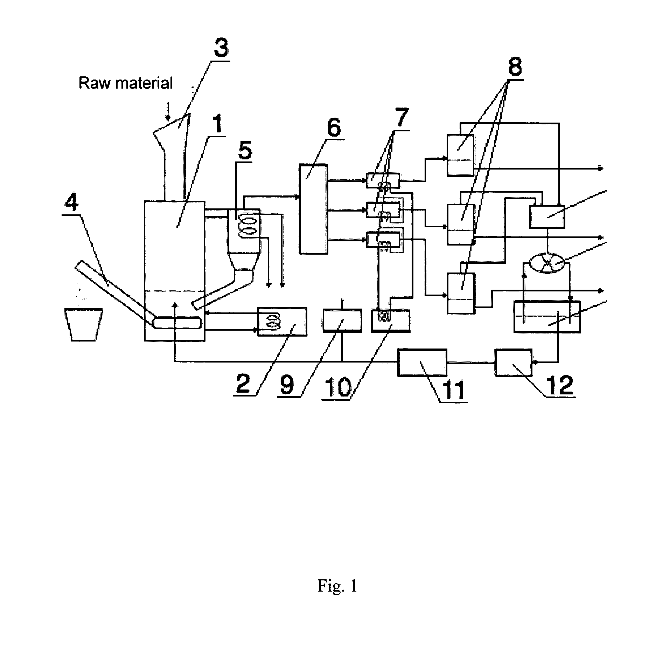

The method according to the invention can be carried out with additional catalysts and without them. It can be carried out under normal, elevated or reduced pressure. Without limiting the scope of the invention, in Figure 1, an example of a preferred installation to carry out the pyrolysis using the method according to the invention was shown. It is an installation that provides zero-emission process, without access of air. The zero emission process should be understood as devoid of any direct outlet of gases generated in the pyrolysis process into the atmosphere. All the resulting products are purified either by distillation in fractional column or by absorbers for the discharged gases. Purification of the discharged gases takes place also by contacting these gases with a water jacket in the vacuum pump with a rotating water ring. The installation operates continuously in a closed system, so that all the sections are airtight, and are interconnected in a tight manner - to maintain the vacuum. In the presented installation, an engine acting as power generator is also included. In the engine, resulting pyrolytic gases are used as a fuel. The installation meets high environmental standards regarding zero emission and trapping, in the adsorber and in the vacuum pump with water ring, undesirable impurities present in the resulting products.

The installation used for carrying out the method according to the invention is composed of a pyrolytic reactor 1 comprising reactor heating section 2 and a raw material feeder 3, wherein the feeder is provided with an airtight lock blocking the access of air to the reactor. The reactor also includes a system 4 discharging solid residues from the reactor. Behind the reactor, there is a cyclone 5 (separator of solid particles, which then are discharged into the reactor), followed by a fractional column 6, which the waste material degradation products are brought to. The installation is also provided with a heat exchangers 7, where the pyrolysis products are condensed, and with a final product tanks 8. In the installation, an engine 9 driven by pyrolytic gases charged directly from the installation was included. The installation comprises a main heat exchanger 10 supplying an exchangers 7 and a fuel tank 11 supplying the reactor heating section, a compressor 12 and a separator 13, as well as a dephlegmator 15. The installation is also provided with a pressure control system 14. This system, depending on the way the process is conducted, may provide the maintenance of a constant atmospheric pressure, or elevated or reduced pressure. Preferably, the system 14 includes a suction (vacuum) pump ensuring the maintenance, in the installation, of a reduced pressure of 0.1 to 0.9 atmospheres. Reduced pressure is achieved by sucking the pyrolytic gases from the entire installation.

The pyrolysis modifier is dosed into the reactor, preferably through a dispensing nozzle from an evaporator or an atomizer. However, other dosages of the composition are also possible - e.g. gravity spraying or feeding the modifier together with the pyrolytic gases (or other gases) directed back to the reactor.

In the described installation, reactor does not contain any technical means for mixing the raw material subjected to pyrolysis. Thus, the process takes place without mixing and, nevertheless, the beneficial effects of the carbon black (quick coke) not being deposited on parts of the reactor are observed. Thanks to the use of the pyrolysis modifier, it is possible to use structurally very simple pyrolytic reactors.

### Example 1

### Preparation of pyrolysis modifier composition

### Composition A:

20% by weight of water, 30% by weight of isopropanol, 30% by weight of n-butanol, 10% by weight of carbamide and 10% by weight of monoacetylferrocene,

### Composition B:

30% by weight of water, 35% by weight of isopropanol, 25% by weight of n-butanol, 5% by weight of carbamide, 5% by weight of monoacetylferrocene.

### Composition C:

20% by weight of water, 50% by weight of isopropanol, 15% by weight of carbamide and 15% by weight of monoacetylferrocene.

The results of physicochemical properties analysis of the modifier (Composition A) are shown below.

| Analysis | Value | Unit | Method of determination |
|---|---|---|---|
| COMBUSTION HEAT | 8.2835 | MJ/kg | CALORIMETER |
| CHLORINE CONTENT | 0.0297 | % | ION CHROMATOGRAPHY |
| SULPHUR CONTENT | 0.0038 | % | ION CHROMATOGRAPHY |
| ASH | | % | PN-EN 15169 |
| FLASH POINT | >55 | °C | PN-EN ISO 3680 |
| pH | 2 | | TEST MN 902 04 |
| TEST H₂O₂ | 0 | mg/dm³ | TEST MN QUANTOFIX 913 12 |
| TEST NO₃ NO₂ | 0/0 | mg/dm³ | TEST MN QANTOFIX 913 13 |
| TEST CN⁻ | negative result | | TEST MN 906 04 |
| OXIDISING AGENTS | negative result | | TEST MN 907 54 |

Composition A was diluted with water as a carrier so that the following solutions were obtained:
1) 5% of composition A + 95% of water
2) 10% of composition A + 90% of water
3) 15% of composition A + 85% of water

### Example 2

The use of the modifier in the processes of pyrolysis of polyolefin plastics (PE + PP) - low-temperature process (200 - 260°C) under reduced pressure conditions

PE + PP raw waste material in an amount of 20 tons was subjected to fragmentation, and, through an airtight lock of the feeder, it was introduced into the pyrolytic reactor. Solution No 2 of the modifier (10% of composition A + 90% of water) was dosed into the reactor through a nozzle, which ensures the provision of the solution at a rate of 100 ml/hour. The ratio of the dosed modifier solution was maintained at a level of about 100 ml of solution per 1 ton of the raw material subjected to pyrolysis. For 20 tons of raw material, 2000 ml of solution was used. In a continuous process of pyrolysis, 20 tons of raw material was processed within 24 hours. When providing the reactor with another portion of the raw material, another proportional portion of the modifier solution was dosed (1000 ml of solution per 10 tons of raw material). Modifier solution was dosed at the initial stage in a continuous manner, and then, at intervals depending on other process parameters: temperature in the reactor, pressure, yield of fractions.

In the process, per each ton of raw material from plastics, 25% by weight of the dry gas, 20% of fuel fraction and 50% of the oil fraction and 5% of residual solids, which were formed from various types of fillers contained in the raw waste material.

### Example 3

The use of the modifier in the pyrolysis processes of a mixture of plastics (PE + PP + 20% PA) - low-temperature process was carried out at 200-650°C under normal pressure.

PE + PP raw waste material in an amount of 20 tons was subjected to fragmentation, and, through an airtight lock of the feeder, it was introduced into the pyrolytic reactor. Solution No 2 of the modifier (10% of composition A + 90% of water) was dosed into the reactor through a nozzle, which ensures the provision of the solution at a rate of 120 ml/hour. The ratio of the dosed modifier solution was maintained at a level of 120 ml of solution per 1 ton of the raw material subjected to pyrolysis. For 20 tons of raw material, 2400 ml of solution was used. In the pyrolysis process, 20 tons of raw material was processed within 24 hours. When providing the reactor with another portion of the raw material, another proportional portion of the modifier solution was dosed (1200 ml of solution per 10 tons of raw material). Modifier solution was dosed at the initial stage in a continuous manner, and then, at intervals depending on other process parameters: temperature in the reactor, pressure, yield of fractions.

In the process, per each ton of raw material from plastics, 50% by weight of the dry gases, 45% of the oil fraction and 5% of residual solids originating from fillers contained in the raw materials.

### Example 4

The use of the modifier in the pyrolysis processes of rubber waste in the form of car tires - low-temperature process (200-530°C) carried out under reduced pressure.

Raw waste material from tires in an amount of 20 tons was subjected to fragmentation, and, through an airtight lock of the feeder, it was introduced into the pyrolytic reactor. Solution No 2 of the modifier (10% of composition A + 90% of water) was dosed into the reactor through a nozzle, which ensures the provision of the solution at a rate of 400 ml/hour. The ratio of the dosed modifier solution was maintained at a level of about 400 ml of solution per 1 ton of the raw material subjected to pyrolysis. For 20 tons of raw material, 8000 ml of solution was used. In the pyrolysis process, 20 tons of raw material was processed within 24 hours. When providing the reactor with another portion of the raw material, another proportional portion of the modifier solution was dosed (4000 ml of solution per 10 tons of raw material). Modifier solution was dosed at the initial stage in a continuous manner, and then, at intervals depending on other process parameters: temperature in the reactor, pressure, yield of fractions.

In the process, per each ton of raw material subjected to pyrolysis, 40% by weight of the solid residues (30% of metal residues and 10% of quick coke), 40% of wide liquid hydrocarbon fraction, 20% by weight of the dry gases were obtained.

### Example 5 - comparative

Pyrolysis process was carried out as in Example 4, but on a different kind of test installation to avoid damage to main installation by the retention of carbon black. The modifier composition was not dosed into the reactor. A comparative analysis of solid residues was performed. The content of quick coke was about 85% higher in comparison with the process carried out with the participation of the modifier as in Example 4. On the test installation, the quick coke retention was observed on its walls, where the strongest heating of the pyrolytic mixture occurred. The process could not be carried out in a continuous manner. Some parts of the reactor, due to permanent contamination with coke, were replaced with new ones.

In the above-described examples of carrying out the pyrolysis with the use of a chemical modifier, any deposition of quick coke on any parts of the installation was not observed; it was not necessary to clean the reactor or to replace any of its components due to the deposition of quich coke.

## Claims

1. A method of carrying out a continuous process of pyrolysis of plastic waste and/or rubber waste and/or organic waste, comprising subjecting these components to a thermal decomposition in the pyrolytic reactor without any access of air, at a temperature of 200 to 850°C, under atmospheric pressure or elevated pressure or reduced pressure, **characterized in that**, into the pyrolytic reactor chamber, a composition of chemical modifier is dosed, which comprises 10 to 30% by weight of water, 20 to 80% by weight of at least one aliphatic alcohol, 5 to 15% by weight of carbamide or its derivatives of R₁R₂N(CO)NR₃R₄ type, wherein R₁, R₂, R₃, R₄ are the same or different and constitute C₁-C₆ alkyl groups, and 5 to 15% by weight of monoacetylferrocene, wherein this composition, prior to dispensing into the reactor, is additionally diluted with water, so that after dilution, it contains from about 5% by weight of composition and 95% by weight of water to 15% by weight of composition, and 85% of water.

2. The method according to claim 1, **characterized in that** the composition, before dilution, contains 10 to 30% by weight of water, 20 to 40% by weight of isopropanol, 20 to 40% by weight of n-butanol, 5 to 15% by weight of carbamide and 5 to 15% by weight of monoacetylferrocene, more preferably contains 15 to 25% by weight of water, 25 to 35% by weight of isopropanol, 25 to 35% by weight of n-butanol, 8 to 12% by weight of carbamide, and 8 to 12% by weight of monoacetylferrocene.

3. The method according to claim 2, **characterized in that** the modifier composition contains 20% by weight of water, 30% by weight of isopropanol, 30% by weight of n-butanol, 10% by weight of carbamide and 10% by weight of monoacetylferrocene.

4. The method according to claim 1 or 2 or 3, **characterized in that** 50 to 500 ml of the diluted modifier composition is dosed per 1 ton of plastic waste and/or rubber waste and/or organic waste.

5. The method according to claim 4, **characterized in that** 50 to 150 ml of the diluted modifier composition is dosed per 1 ton of plastic waste, especially polyolefinic, or 300 to 500 ml of the diluted composition per 1 ton of rubber waste.

6. The method according to any of claims 1 to 5, **characterized in that** it is carried out in a zero emission installation, devoid of direct outlet of gases generated in the process into the atmosphere.

7. The method according to any of claims 1 to 6, **characterized in that** it is carried out in an airtight installation under reduced pressure conditions.

8. The method according to any of claims 1 to 7, **characterized in that** it is carried out under pressure of 0.2 to 0.8 atm.

9. The use of a composition comprising 10 to 30% by weight of water, 20 to 80% by weight of at least one aliphatic alcohol, 5 to 15% by weight of carbamide or its derivatives of R₁R₂N(CO)NR₃R₄ type, wherein R₁, R₂, R₃, R₄ are the same or different and constitute C₁-C₆ alkyl groups, and 5 to 15% by weight of monoacetylferrocene, to conduct the continuous pyrolysis of plastic waste and/or rubber waste and/or organic waste in the pyrolytic reactor without any access of air, at a temperature of 300 to 850°C, at atmospheric pressure or elevated pressure or reduced pressure, wherein the composition is diluted with water so that the diluted solution contains 5 to 15% by weight of the original composition.
